# EUROPEAN PATENT APPLICATION

(11) **EP 0 697 306 A1**
(43) Date of publication of application: **21.02.1996**
(21) Application number: 95112081.5
(22) Date of filing: 01.08.1995
(51) Int. Cl.: B60N 2/06

(54) **Guide-slide assembly, particularly for vehicle seats**

(30) Priority: 04.08.1994 IT TO940646
(71) Applicant: FERRERO GIULIO S.p.A., I-10122 Torino (IT)
(72) Inventor: Ferrero, Ferruccio, I-10040 Savonera, Venaria (IT)
(74) Representative: Prato, Roberto

(57) **Abstract**

A guide-slide assembly (1), particularly for vehicle seats, wherein a guide (2), fittable to the vehicle floor (3), is fitted with an axially movable slide (5) supporting the seat (7); the guide (2) and the slide (5) being connected to each other along pairs of inclined, converging walls (14, 25); and each pair of inclined walls (14, 25) defining a rolling channel (33) with four contact sectors (19, 20, 31, 32) for a number of rolling bodies (6), and a retaining assembly (38) for preventing vertical detachment of the slide (5) from the guide (2) in the event of failure of the rolling bodies (6) or the walls (14, 25).

## Description

The present invention relates to a guide-slide assembly, particularly for vehicle seats, i.e. an assembly fittable between the vehicle floor and a movable seat, for permitting controlled displacement of the seat in relation to the floor, in a given direction, and along a generally straight path.

It is an object of the present invention to provide a guide-slide assembly wherein the slide, connected in sliding manner to the guide and integrally with the seat, provides for smooth running of the seat along the guide, and for preventing detachment of the slide from the guide in a direction crosswise to the longitudinal guide axis.

According to the present invention, there is provided a guide-slide assembly, particularly for vehicle seats, comprising a guide fittable to the vehicle floor; and a slide connected to the guide so as to slide in an axial direction, and supporting the seat; the guide and the slide each presenting opposite lateral walls; and each lateral wall of the guide being positioned facing a corresponding lateral wall of the slide; characterized in that the walls in each pair of corresponding walls define a rolling channel for a number of rolling bodies; each pair of corresponding walls defining a respective retaining assembly for preventing transverse detachment of the slide from the guide in the event of failure of the rolling bodies or the walls.

According to a preferred embodiment of the assembly according to the present invention, the walls in each pair of corresponding walls are parallel to said slide direction, and present respective facing, substantially parallel surfaces sloping towards the other pair of corresponding walls.

Preferably, said rolling bodies are balls, and each said channel is a cylindrical, internally grooved channel defining, for each ball, two pairs of diametrically opposed contact sectors.

A non-limiting embodiment of the present invention will be described by way of example with reference to the accompanying drawings, in which:
Figure 1 shows a view in perspective, with parts removed for clarity, of a preferred embodiment of the guide-slide assembly according to the present invention;
Figure 2 shows a cross section of Figure 1;
Figure 3 shows a cross section of a first detail in Figure 2;
Figure 4 shows a cross section of a second detail in Figure 2.

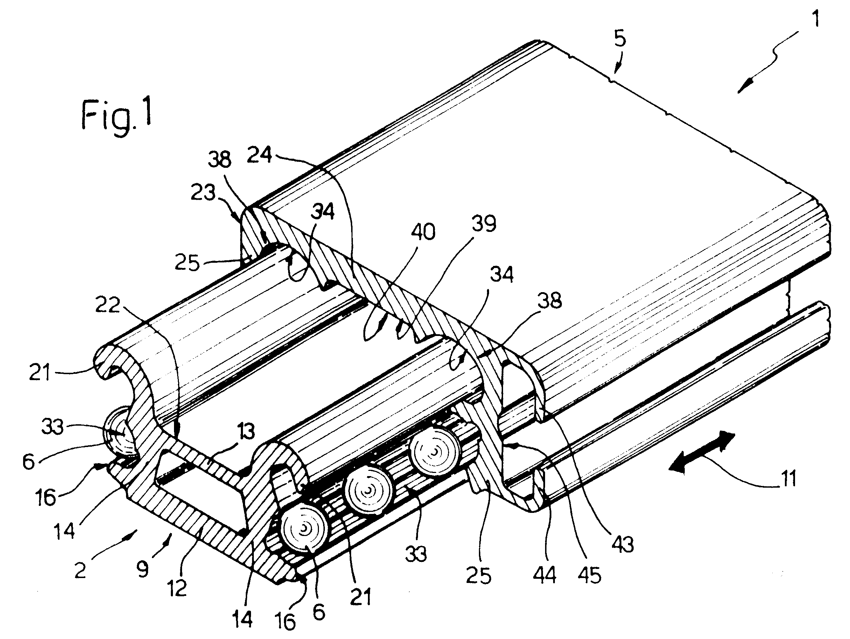

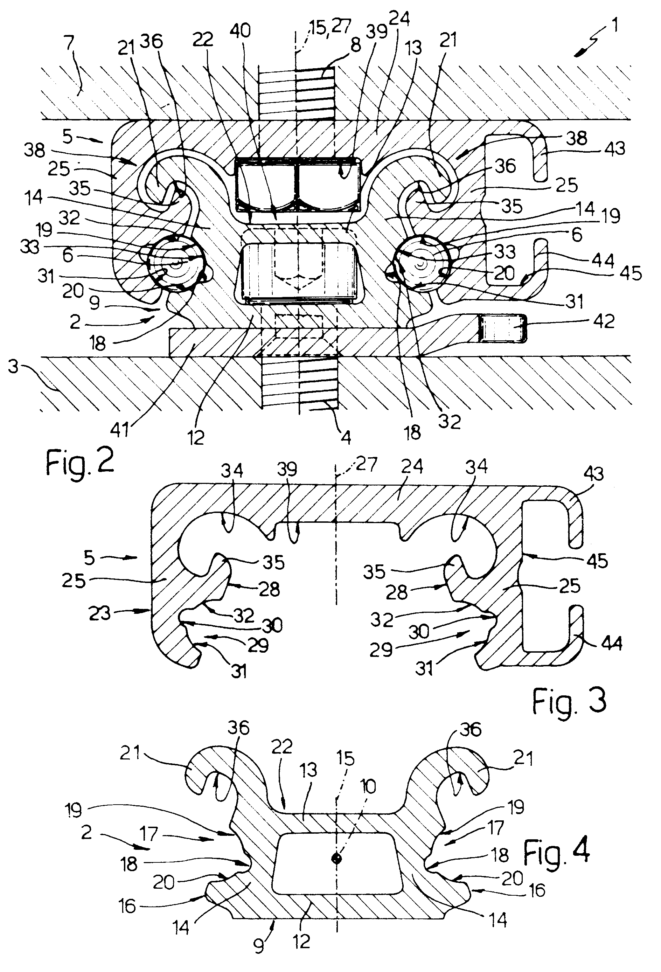

Number 1 in Figures 1 and 2 indicates a guide-slide assembly comprising a straight guide 2 fittable to the floor 3 of a vehicle (not shown) via the interposition of screws 4 (only one shown); and a slide 5 fitted to guide 2 in axially sliding manner via the interposition of a number of rolling bodies comprising balls 6, and which supports a vehicle seat 7 to which it is connected integrally via the interposition of screws 8 (only one shown).

As shown in Figure 2, and particularly in Figure 4, guide 2 is defined by an extruded, light alloy tubular section 9, and presents a longitudinal axis 10 parallel to the slide direction 11 (Figure 1) of slide 5 in relation to guide 2. Section 9 comprises a bottom wall 12 positioned facing floor 3; a top wall 13 parallel to wall 12 and facing slide 5; and two lateral walls 14 between walls 12 and 13 and on either side of a plane of symmetry 15 perpendicular to walls 12 and 13. More specifically, walls 14 are defined externally by respective surfaces 16 converging towards slide 5, and each of which forms an angle of roughly 20° with plane 15.

As section 9 is perfectly symmetrical in relation to plane 15, only the half to the left in Figure 4 will be described below using the same reference numbers as for the corresponding parts of the half to the right.

Wall 14 presents an external, substantially semicylindrical groove 17, at the bottom of which is formed axially a further groove 18 which divides the surface of groove 17 into two supporting surfaces or sectors 19 and 20 along which balls 6 roll in use. More specifically, and as shown in Figure 2, surface 20 is located partly beneath balls 6 to at least partly form a supporting and rolling track for balls 6.

The top portion of wall 14 projects beyond wall 13, and defines a rib 21 with a substantially hook-shaped, downwardly-concave section; and the two ribs 21 define, between them and together with wall 13, an open-topped recess 22 extending along the entire length of guide 2.

As shown in Figure 2, and particularly in Figure 3, slide 5 is defined by an extruded, light alloy channel section 23, and presents an inner contour substantially complementary to the outer contour of guide 2. More specifically, section 23 comprises a top wall 24 facing seat 7; and two lateral walls 25 extending downwards from the opposite lateral edges of wall 24, and located on either side of a plane of symmetry 27 perpendicular to wall 24.

As section 23 is perfectly symmetrical in relation to plane 27, only the half to the left in Figure 3 will be described below using the same reference numbers as for the corresponding parts of the half to the right.

Wall 25 presents an inner surface 28 parallel to surface 16 of wall 14, and presenting an internal, substantially semicylindrical groove 29, at the bottom of which is formed axially a further groove 30 which divides the surface of groove 29 into two retaining surfaces or sectors 31 and 32 on which ball 6 roll in use. More specifically, and as shown in Figure 2, surfaces 31 and 32 are diametrically opposite surfaces 19 and 20 with which they define a substantially cylindrical channel 33 with four rolling contact sectors for balls 6.

Between groove 29 and wall 24, surface 28 presents a further longitudinal groove 34 of a shape substantially complementary to that of rib 21, and along which rib 21 extends in sliding and transversely slack manner. More specifically, groove 34 is so formed as to define, on wall 25, a rib 35 parallel and adjacent to surface 28, and presenting a cross section substantially complementary to a longitudinal groove or underside recess 36 defined by rib 21. Together with rib 21, rib 35 defines a retaining assembly 38 for preventing detachment of slide 5 from guide 2 in the event of failure of balls 6 or the bottom end of lateral wall 25 of slide 5.

Wall 24 also presents a central longitudinal groove 39 extending between grooves 34 along the whole length of slide 5, and defining, together with recess 22, a longitudinal channel 40 housing the heads of screws 8.

The wedgelike inclination of surfaces 16 of lateral walls 14 of guide 2 and the corresponding inclination of surfaces 28 of walls 25 of slide 5 provide, together with channels 33 and balls 6 inserted therein, for a self-centering wedge connection of guide 2 and slide 5 and, hence, substantially vibrationfree travel of slide 5 along guide 2.

As shown in Figure 2, assembly 1 also comprises a plate 41 extending along substantially the whole of assembly 1, and which is interposed in a fixed position between guide 2 and floor 3. Along one longitudinal edge, plate 41 presents a rack 42 projecting laterally outwards of wall 12, and located beneath two superimposed appendixes 43, 44 extending laterally outwards from one of lateral walls 25 of slide 5. Appendixes 43 and 44 present a substantially L-shaped section, and are arranged with their free ends facing each other to define an open recess 45 for housing a known powered or manually operated device (not shown) presenting a pinion (not shown) which meshes with rack 42 to move slide 5, and hence seat 7, in relation to guide 2 and, hence, in relation to floor 3.

## Claims

1. A guide-slide assembly (1), particularly for vehicle seats, comprising a guide (2) fittable to the vehicle floor (3); and a slide (5) connected to the guide (2) so as to slide in an axial direction (11), and supporting the seat (7); the guide (2) and the slide (5) each presenting opposite lateral walls (14, 25); and each lateral wall (14) of the guide (2) being positioned facing a corresponding lateral wall (25) of the slide (5); characterized in that the walls (14, 25) in each pair of corresponding walls (14, 25) define a rolling channel (33) for a number of rolling bodies (6); each pair of corresponding walls (14, 25) defining a respective retaining assembly (38) for preventing transverse detachment of the slide (5) from the guide (2) in the event of failure of the rolling bodies (6) or the walls (14, 25).

2. An assembly as claimed in Claim 1, characterized in that the walls (14, 25) in each pair of corresponding walls (14, 25) are parallel to said slide direction (11), and present respective facing, substantially parallel surfaces (16, 28) sloping towards the other pair of corresponding walls (14, 25).

3. An assembly as claimed in Claim 1 or 2, characterized in that said rolling bodies are balls (6); and each said channel is a cylindrical, internally grooved channel (33) defining, for each ball (6), two pairs of diametrically opposed contact sectors (19, 20, 31, 32).

4. An assembly as claimed in any one of the foregoing Claims, characterized in that each said retaining assembly (38) comprises hook means (21) on one (14) of the respective two corresponding walls; and seating means (34) on the other (25) said corresponding wall; the seating means (34) receiving the hook means (21) in axially sliding and transversely slack manner; the hook means (21) presenting an axial underside recess (36); and said seating means (34) defining, on the respective corresponding wall (25), engaging means (35) extending inside and engaging said underside recess (36) in axially sliding manner.

5. An assembly as claimed in Claim 4, characterized in that said seating means (34) and said engaging means (35) are formed on said slide (5).

6. An assembly as claimed in Claim 5, characterized in that said hook means (21) comprise a rib (21) formed on said guide (2) and presenting a substantially hook-shaped section; said underside recess (36) being defined by an inner groove (36) of said hook-shaped rib (21).
